# NOUVEAU FASCICULE DE BREVET EUROPEEN

(11) **EP 0 233 428 B2**
(45) Date de publication et mention de la décision concernant l'opposition: **15.03.2000**
(45) Mention de la délivrance du brevet: 06.09.1989
(21) Numéro de dépôt: 86402902.0
(22) Date de dépôt: 22.12.1986
(51) Int. Cl.: C08L 77/00, C08L 77/02

(54) **Alliages à base de polyamide, polyétheramide et élastomère thermoplastique**
Legierung auf der Basis von Polyamid, Polyetheramid und thermoplastischem Elastomer
Alloys based on polyamide, polyether amide and thermoplastic elastomer

(30) Priorité: 30.12.1985 FR 8519421
(43) Date de publication de la demande: 26.08.1987
(73) Titulaire: ELF ATOCHEM S.A., 92800 Puteaux, Hauts-de-Seine (FR)
(72) Inventeur: Couchoud, Jean-Jacques, F-27930 Saint-Sébastien de Morsent (FR); Glotin, Michel, F-27470 Serquigny (FR); Guérin, Bernard, F-91440 Bures-sur-Yvette (FR); Parmeland, Georges, F-64000 Pau (FR)
(74) Mandataire: Neel, Henry

(56) Documents cités:
- EP-A- 0 000 583
- EP-A- 0 135 218
- EP-A- 0 193 720
- CH-A- 655 941
- DE-A- 2 622 973
- DE-A- 2 716 004
- DE-A- 2 722 270
- DE-C- 3 428 404
- FR-A- 2 386 582
- FR-A- 2 532 653
- GB-A- 998 439
- GB-A- 2 093 469
- JP-A- 5 749 656
- JP-A- 5 935 313
- JP-A- 5 935 314
- US-A- 3 267 175
- US-A- 3 796 771
- US-A- 4 299 744
- US-A- 4 362 846
- US-A- 4 381 371
- Polymer Bulletin 1987, 17: 71-77

## Description

Les polyamides sont largement utilisés, sous forme d'objets moulés ou extrudés, dans de nombreuses applications pour lesquelles on apprécie leurs excellentes propriétés mécaniques, notamment leur très bonne résistance aux chocs.

Les exigences à ce sujet étant de plus en plus élevées, divers moyens ont été proposés pour augmenter cette résistance aux chocs; parmi ces moyens, notons, plus particulièrement, l'additon de certains polymères possédant un net caractère élastomérique.

Parmi les polymères "anti-choc" proposés dans ce but, nous pouvons citer :
a) Les copolymères, greffés ou non, réticulés ou non, à base, essentiellement, d'acrylonitrile de butadiène et de styrène (Brevets U.S n° 3.134.746 - 3.218.371 - 3.267.175 - 4.381.371).
b) Les copolymères à base de monooléfines insaturées, plus particulièrement, d'éthylène et d'acide acrylique, d'acide méthacrylique, d'acétate de vinyle, etc... (DE-AS 19 08 468 - 27 13 537 - G.B 998.439 - U.S. 4.362.846 - demande japonaise 15 5318).
c) Les copolymères d'éthylène, de propylène et de diène appelés EPDM, le diène étant dans la plupart des cas, le 1,3 butadiène ou l'isoprène (Brevet Stamicarbon NL 83.02602 - Article de KUNSTSTOFFE 75 (1985) 3 - p.160).
d) Les copolymères, greffés ou non, réticulés ou non, à base, essentiellement, de méthacrylate de méthyle, de butadiène et de styrène (Brevets U.S 3.668.274 - 3.796.771 - 3.984.497 - demande japonaise n° 76.87138).
e) Des mélanges de polyoléfines, copolymères de butadiène et d'acrylonitrile (DE-OS 27 34 693).
f) Les élastomères de polyéthylène chloré (U.S 4.207.404).
g) Les caoutchoucs nitriles, ce terme désignant essentiellement les copolymères du 1,3 butadiène ou de l'isoprène avec l'acrylonitrile (EP 131113 A).

Nous avons trouvé et, ceci fait l'objet de la présente invention, que la résistance aux chocs des compositions binaires : polyamide-élastomère citées ci-dessus pouvait être considérablement augmentée par l'addition d'un troisième composant : un polyétheramide. La composition ternaire qui en résulte peut être considérée comme un alliage du fait de son homogénéité.

Les alliages que nous revendiquons sont des compositions ternaires constituées essentiellement de 30 à 94,8 parties en poids de polyamide, de 0,2 à 65 parties en poids de polyétheramide et de 5 à 50 parties d'élastomère thermoplastique, la somme de ces trois constituants devant être égale à 100 et l'élastomère résultant de la copolymerisation, statistique ou séquencée, avec ou sans greffage, avec ou sans réticulation, d'au moins deux monomères insaturé's, l'un des monomères étant un diène conjugué ou l'élastomère étant un EPDM. De préférence ces compositions contiennent 2 à 25 parties de polyétheramide, 60 à 95 parties de polyamide, le complément à 100 étant formé par l'élastomère.

En plus des ces trois constituants essentiels, ces alliages peuvent comprendre des constituants accessoires tels que plastifiants, stabilisants à la chaleur ou à la lumière, charges telles que fibres de verre et de carbone.

Par polyamides, nous entendons les polymères résultant de la polycondensation d'un ou plusieurs aminoacides
tels les acides aminocaproïque, amino-7-heptanoïque, amino-11-undécanoïque et amino-12-dodécanoïque d'un ou plusieurs lactames
tels que caprolactame, oenantholactame et lauryllactame.
d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides
tels les acides isophtalique, téréphtalique, adipique, azélaïque, subérique, sébacique et dodécanedicarboxylique
ou des mélanges de tous ces monomères ce qui conduit à des copolyamides.

Par polyétheramides, nous entendons aussi bien les polyétheramides statistiques (c'est-à-dire formés par l'enchaînement aléatoire des divers constituants monomères) que les polyétheramides séquencés, c'est-à-dire formés de blocs présentant une certaine longueur de chaîne de leurs divers constituants.

Les polyétheramides séquencés résultent de la copolycondensation de séquences polyamides à extrémités réactives avec des séquences polyéthers à extrémités réactives, telles que, entre autres :
1°/ Séquences polyamides à bouts de chaîne diamines avec des séquences polyoxyalkylènes à bouts de chaînes dicarboxyliques.
2°/ Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatique appelées polyétherdiols.
3°/ Séquences polyamides à bouts de chaînes dicarboxyliques avec des polyétherdiols, les polyétheramides obtenus étant, dans ce cas particulier, des polyétheresteramides.

La composition et la fabrication de tels polyétheresteramides ont été décrites dans les brevets français n° 74.18913 et 77.26678 au nom de la demanderesse et dont le contenu s'ajoute à la présente description.

Selon un mode de réalisation de l'invention, le polyétheramide associé au polyamide et à l'élastomère est un polyétheresteramide séquencé de poids moléculaire supérieur à 10.000, formé du produit de la copolycondensation d'un polyamide ou copolyamide alphaoméga dicarboxylique présentant un poids moléculaire de 300 à 15.000 et, de préférence, 600 à 5.000, employé à raison de 95 à 15% en poids, et d'un polyétherdiol présentant un poids moléculaire de 100 à 6.000 et, de préférence 200 à 3.000 le polyétherdiol étant de préférence polyoxytétramethylène glycol ou polyoxypropylène glycol de poids moléculaire de 200 à 3000, employé à raison de 5 à 85% en poids, ledit produit présentant un point de fusion compris entre 80 et 210°C.

Par élastomère, nous entendons les "polymères anti-choc" cités aux paragraphes a), c), d), e), et g) cités ci-dessus et, d'une manière générale, tous les élastomères thermoplastiques résultant de la copolymérisation, statistique ou séquencée, avec ou sans greffage, avec ou sans réticulation, d'au moins deux monomères insaturés tels, une oléfine insaturée comme l'éthylène, le propylène, un acrylate tel l'plate de butyle, méthacrylate d'alcoyle tel le méthacrylan de méthyle, l'acrylonitrile. un diène conjugué tel le butadiène, l'isoprène, l'acide acrylique, l'anhydride maléique, l'un des monomères étant un diene conjugué ou l'élastomère étant un EPDM.

Comme dit ci-dessus, ces élastomères peuvent être réticulés à condition toutefois de rester thermoplastiques.

On peut également réaliser les alliages de l'invention à partir de un ou plusieurs polyamides, un ou plusieurs polyétheramides et un ou plusieurs élastomères.

Les alliages selon l'invention sont aptes à être transformés en objets moulés par les techniques habituelles d'injection ou de compression ou en tubes, films, revêtements sur câbles par extrusion.

En plus de leur très grande résistance au choc, à la température ordinaire ou à basses températures, ces alliages possèdent d'autres caractéristiques intéréssantes : souplesse, élasticité, faible dureté,... caractéristiques que l'on peut faire varier à volonté en jouant sur la nature et le pourcentage des constituants; en effet, d'une manière générale, les polyétheramides et les élastomères sont plus souples, plus élastiques, présentent une plus faible dureté que les polyamides.

Le fabrication des alliages de l'invention se fait par malaxage à l'état fondu des trois constituants principaux (en présence éventuellement des constituants accessoires cités ci-dessus) et refroidissement.

Cette opération peut se faire dans tout appareil assurant un bon malaxage tel que extrudeuse mono ou double vis, comalaxeur planétaire ou non... cet appareil étant alimenté avec un mélange des constituants préalablement préparé à sec, par exemple, au tonneau; on peut également alimenter le malaxeur avec les constituants introduits séparément.

Les températures de travail seront telles que les trois constituants soient bien fondus; elles ne seront pas trop élevées ce qui risquerait de provoquer une décomposition et de réduire le degré de malaxage du fait de l'abaissement de la viscosité de fusion.

Dans les exemples qui suivent, donnés à titre illustratif et nullement limitatif, les alliages ont été préparés au moyen d'un "ko-malaxeur" type PR 46 de la Société Suisse BUSS AG.

Cet appareil étant muni à son extrémité d'une filière à trous cylindrique de 4 mm de diamètre, il en sort en continu des joncs liquides que l'on solidifie et refroidit par immersion dans un bac d'eau froide avant de les faire passer dans un granulateur.

Les granulés qui en résultent sont soigneusement séchés et utilisés pour mouler les éprouvettes nécessaires aux essais de choc.

Ces essais de choc ont été de deux sortes :
- essais de choc CHARPY, pratiqués suivant la norme ISO 179 sur éprouvettes 4 x 6 x 50 mm entaillées en U,
- essais de choc IZOD, selon la norme ISO 170 sur éprouvettes 6,4 x 12,7 x 63,5 mm entaillées en V, les énergies de rupture étant exprimées, dans l'un et l'autre cas, en KJ.m⁻².

Les alliages ont été préparés à partir des trois constituants principaux suivants :

### 1°) POLYAMIDE

Deux lots de polyamide 12 on été mis en jeu, l'un de viscosité inhérente égale à 1,15 dl.g⁻¹ que nous désignerons par l'abréviation PA 12-115,
l'autre de viscosité inhérente égale à 1,65 dl.g⁻¹ que nous désignerons PA 12-165,
leur viscosité inhérente ayant été mesurée à 25°C sur une solution de 0,5 g dans 100 g de méta-crésol.

### 2°) POLYETHERAMIDE

Deux polyétheresteramides séquencés ont été mis en jeu, respectivement :
- le premier que nous désignerons par l'abréviation : PA 12 PTMG-1, résulte de la polycondensation, suivant le mode opératoir décrit dans le brevet français n° 74.18913, de 67 parties en poids d'un prépolymère de polyamide 12 dicarboxylique (obtenu à partir de lauryllactame et d'acide adipique) de masse moléculaire 2000 avec 33 parties en poids de polyoxytétraméthylène glycol (PTMG) de masse moléculaire 1.000, ce polyétheresteramide ayant une viscosité inhérente de 1,60 dl.g⁻¹, mesurée à 25°C sur une solution de 0,5 g dans 100 g de méta-crésol.
- le deuxième, PA 12 PTMG-2, résulte de la polycondensation, effectuée de la même manière, de 30 parties en poids de prépolymère de polyamide 12 adipique, de masse moléculaire 850, avec 70 parties de PTMG de masse moléculaire 2.000.

Il a une viscosité inhérente de 1,80 dl.g⁻¹.

### 3°) ELASTOMERE

Les élastomères suivants ont été mis en jeu, respectivement:
- Un MBS (copolymère greffé à base de butadiène, de méthacrylate de méthyle et de styrène) : le PARALOID KM 653 de la Société ROHM and HAAS - des mesures de solubilité dans le toluène ont montré que cet élastomère était faiblement réticulé.
- Un ABS (copolymère greffé à base d'acrylonitrile, de butadiène et de styrène) de la Société BORG-WARNER : le BLENDEX 310 S.
- Un copolymère à base de butadiène, d'acrylate de butyle et de méthacrylate de méthyle : le DURASTRENGTH D 200 de la Société M and T CHEMICALS.
- Un EPDM (éthylène propylène, diènes, monomères) : le VISTALON 1721 de la Société ESSO-CHIMIE.
- Un NBR (caoutchouc à base de butadiène et d'acrylonitrile) le CHEMIGUM P 756 C de la Société GOOD YEAR.

La trémie du comalaxeur est chargée avec le mélange des trois constituants préparé à l'avance par mélange au tonneau à sec des granulés de polyamide et de polyéther-amide avec la poudre ou les granulés d'élastomère, le pourcentage de chacun des constituants étant indiqué sur les deux tableaux ci-joints.

Les températures à l'intérieur de comalaxeur sont au maximum de 230°C quand le polyamide utilisé est le PA 12-115
de 245°C quand le polyamide utilisé est le PA 12-165

Par exemple, pour le mélange PA 12-115, PTMG-1, MBS, 75-5-20, les températures, mesurées en 6 zones, sont en partant de l'entrée jusqu'à la sortie :
195°C 200°C 230°C 230°C 230°C 215°C
pour le mélange PA 12-165, PTMG-1, EPDM, 75- 5-20, elles sont :
185°C 200°C 245°C 245°C 245°C 225°C

Les résultats des essais de choc pratiqués sur les éprouvettes injectées avec les granulés d'alliages sortant du comalaxeur, résultats rassemblés dans les deux tableaux ci-après, montrent clairement que la résistance au choc des polyamides qui n'est que légèrement augmentée par l'addition, soit, de polyétheresteramide, soit d'élastomère, l'est, par contre, de manière considérable par l'addition simultanée de ces deux constituants. En plus de cette très bonne résistance aux chocs, les alliages selon l'invention se caractérisent par une excellente tenue aux hydrocarbures ce qui permet de les utiliser largement dans des applications où ils sont en contact avec des produits pétroliers.

**Tableau 1**

| Compositions des alliages | | | | | | Essais de choc Charpy en KJ.m⁻² avec entaille | | |
|---|---|---|---|---|---|---|---|---|
| Polyamide | | Polyétheramide | | Elastomère | | | | |
| Nature | Parties | Nature | Parties | Nature | Parties | -40°C | -20°C | +23°C |
| PA 12-115 | 100 | | 0 | | 0 | 3,8 | 4,3 | 6,8 |
| PA 12-115 | 95 | PTMG-1 | 5 | | 0 | 4,7 | 4,9 | 10,8 |
| PA 12-115 | 90 | PTMG-1 | 10 | | 0 | 5,5 | 5,8 | 11,5 |
| PA 12-115 | 80 | | 0 | MBS | 20 | 4,1 | 6,8 | 14 |
| PA 12-115 | 75 | PTMG-1 | 5 | MBS | 20 | 13,4 | ne casse pas | ne casse pas |
| PA 12-115 | 70 | PTMG-1 | 10 | MBS | 20 | 14 | ne casse pas | ne casse pas |
| PA 12-115 | 98 | PTMG-2 | 2 | | 0 | 4,5 | 4,6 | 9,0 |
| PA 12-115 | 78 | PTMG-2 | 2 | MBS | 20 | 8 | 22 | ne casse pas |
| PA 12-115 | 95 | PTMG-2 | 5 | | 0 | 5,0 | 5,3 | 11 |
| PA 12-115 | 75 | PTMG-2 | 5 | MBS | 20 | 12 | ne casse pas | ne casse pas |
| PA 12-115 | 80 | | 0 | ABS | 20 | 4,8 | 7 | 15 |
| PA 12-115 | 75 | PTMG-1 | 5 | ABS | 20 | 9 | 12 | ne casse pas |
| PA 12-115 | 80 | | 0 | Acryl | 20 | 4,6 | 7,2 | 14 |
| PA 12-115 | 75 | PTMG-1 | 5 | Acryl | 20 | 12,3 | 21 | ne casse pas |

**Tableau II**

| Compositions des alliages | | | | | | Essais de choc Izod en KJ.m⁻² | |
|---|---|---|---|---|---|---|---|
| Polyamide | | Polyétheramide | | Elastomère | | | |
| Nature | Parties | Nature | Parties | Nature | Parties | -40°C | -20°C |
| PA 12-165 | 100 | | 0 | | 0 | 4,5 | 7,6 |
| PA 12-165 | 95 | PTMG-1 | 5 | | 0 | | 10,9 |
| PA 12-165 | 90 | PTMG-1 | 10 | | 0 | | 14,2 |
| PA 12-165 | 80 | | 0 | EPDM | 20 | | 21,3 |
| PA 12-165 | 75 | PTMG-1 | 5 | EPDM | 20 | | 32,9 |
| PA 12-165 | 70 | PTMG-1 | 10 | EPDM | 20 | | 37 |
| PA 12-165 | 80 | | 0 | NBR | 20 | 9 | 17 |
| PA 12-165 | 75 | PTMG-1 | 5 | NBR | 20 | 12 | 23 |
| PA 12-165 | 70 | PTMG-1 | 10 | NBR | 20 | 13 | ne casse pas |

## Revendications

1. Alliages thermoplastiques constitués essentiellement de 30 à 94,8 parties en poids de polyamide, de 0,2 à 65 parties en poids de polyétheramide et de 5 à 50 parties d'élastomère thermoplastique, la somme de ces trois constituants devant être égale à 100 et l'élastomère résulte de la copolymérisation, statistique ou séquencée, avec ou sans greffage, avec ou sans réticulation, d'au moins deux monomères insaturés, l'un des monomères étant un diène conjugué ou l'élastomère étant un EPDM.

2. Alliages selon la revendication 1 caractérises en ce que le polyétheramide résulte de la copolycondensation de séquences polyamides dicarboxyliques avec des séquences polyoxyalkylènes diamines.

3. Alliages selon la revendication 1 caractérisés en ce que le polyétheramide est un polyétheresteramide obtenu par polycondensation de séquences polyamides alpha-oméga dicarboxyliques avec des séquences polyoxyalkylènes alpha-oméga dihydroxylées aliphatiques.

4. Alliages selon la revendication 3 caractérisés en ce que le polyétheresteramide est obtenu par polycondensation de séquences de polyamides dicarboxyliques de poids moléculaire compris entre 600 et 5000 appartenant au groupe constitué par les séquences de polyamid-6, de polyamide-11 et de polyamide-12, à raison de 95 à 15% en poids, avec 5 à 85% en poids de polyoxytétraméthylène glycol ou de polyoxypropylène glycol de poids moléculaire compris entre 200 et 3000.

5. Alliages selon l'un quelconque des revendications 1 à 4 caractérisés en ce que l'élastomère résulte de la copolymérisation d'au moins deux monomères choisis dans le groupe constitué par l'éthylène, le propylène, le butadiène, l'isoprène, l'acétate de vinyle, l'acrylonitrile, le styrène, l'acrylate de butyle, le méthacrylate de méthyle et l'anhydride maléique.

## Claims

1. Thermoplastic alloys consisting essentially of 30 to 94.8 parts by weight of polyamide, of 0.2 to 65 parts by weight of polyetheramide and of 5 to 50 parts of a thermoplastic elastomer, the sum of these three constituents having to be equal to 100, and the elastomer resulting from the copolymerization, random or block, with or without grafting, with or without crosslinking, of at least two unsaturated monomers, one of the monomers being a conjugated diene or the elastomer being an EPDM.

2. Alloys according to Claim 1, characterized in that the polyetheramide results from the copolycondensation of dicarboxylic polyamide blocks with diamine polyoxyalkylene blocks.

3. Alloys according to Claim 1, characterized in that the polyetheramide is a polyetheresteramide obtained by polycondensation of alpha-omega dicarboxylic polyamide blocks with aliphatic alpha-omega dihydroxylated polyoxyalkylene blocks.

4. Alloys according to Claim 3, characterized in that the polyetheresteramide is obtained by polycondensation of dicarboxylic polyamide blocks of a molecular weight of between 600 and 5,000 belonging to the group consisting of polyamide 6, polyamide 11 and polyamide 12 blocks, in a proportion of 95 to 15% by weight, with 5 to 85% by weight of polyoxytetramethylene glycol or of polyoxypropylene glycol of a molecular weight of between 200 and 3,000.

5. Alloys according to any one of Claims 1 to 4, characterized in that the elastomer results from the copolymerization of at least two monomers chosen from the group consisting of ethylene, propylene, butadiene, isoprene, vinyl acetate, acrylonitrile, styrene, butyl acrylate, methyl methacrylate and maleic anhydride.

## Patentansprüche

1. Thermoplastische Verbundmaterialien oder Legierungen, gebildet im wesentlichen aus 30 bis 94,8 Gewichtsteilen Polyamid, 0,2 bis 65 Gewichtsteilen Polyetheramid und 5 bis 50 Teilen thermoplastischem Elastomer, wobei die Summe dieser drei Bestandteile 100 sein muß und das Elastomer aus der statistischen Copolymerisation oder Blockcopolymerisation von mindestens zwei ungesättigten Monomeren mit oder ohne Pfropfung, mit oder ohne Vernetzung resultiert, wobei eines der Monomere ein konjugiertes Dien ist oder das Elastomer ein EPDM ist.

2. Verbundmaterialien oder Legierungen nach Anspruch 1, dadurch gekennzeichnet, daß das Polyetheramid aus der Copolykondensation von Blöcken von Dicarbonsäurepolyamiden mit Blöcken von Polyoxyalkylendiaminen resultiert.

3. Verbundmaterialien oder Legierungen nach Anspruch 1, dadurch gekennzeichnet, daß das Polyetheramid ein Polyetheresteramid ist, das durch Polykondensation von α,ω-Dicarbonsäurepolyamid-Blöcken mit aliphatischen α, ω-dihydroxylierten Polyoxyalkylen-Blöcken erhalten worden ist.

4. Verbundmaterialien oder Legierungen nach Anspruch 3, dadurch gekennzeichnet, daß das Polyetheresteramid durch Polykondensation von Dicarbonsäurepolyamid-Blöcken mit einem Molekulargewicht zwischen 600 und 5000, gehörend zu der Gruppe, gebildet aus den Polyamid-6-, Polyamid-11- und Polyamid-12-Blöcken, in einer Menge von 95 bis 15 Gew.-% mit 5 bis 85 Gew.-% Polyoxytetramethylenglycol oder Polyoxypropylenglycol mit einem Molekulargewicht zwischen 200 und 3000 erhalten worden ist.

5. Verbundmaterialien oder Legierungen nach einem der Ansprüche 1 bis 4, dadurch gekennzeichnet, daß das Elastomer aus der Copolymerisation von mindestens zwei Monomeren, ausgewählt in der Gruppe, gebildet aus Ethylen, Propylen, Butadien, Isopren, Vinylacetat, Acrylnitril, Styrol, Butylacrylat, Methylmethacrylat und Maleinsäureanhydrid, resultiert.
